# FASCICULE DE BREVET EUROPEEN

(11) **EP 1 653 111 B1**
(45) Date de publication et mention de la délivrance du brevet: **30.04.2014**
(21) Numéro de dépôt: 05292123.6
(22) Date de dépôt: 12.10.2005
(51) Int. Cl.: F16D 65/14

(54) **Frein de véhicule comportant un actionneur électromécanique**
Fahrzeugbremse mit elektromechanischem Aktuator
Vehicle brake comprising an electromechanic actuator

(30) Priorité: 28.10.2004 FR 0411509
(43) Date de publication de la demande: 03.05.2006
(73) Titulaire: Messier-Bugatti-Dowty, 78140 Velizy Villacoublay (FR)
(72) Inventeur: Solignat, Sylvain, 94250 Gentilly (FR); Baldassara, Patrick, 77135 Pontcarré (FR)
(74) Mandataire: Parzy, Benjamin Alain

(56) Documents cités:
- WO-A-01/20188
- US-A- 5 971 110
- US-B1- 6 662 907

## Description

L'invention concerne un frein de véhicule comportant un actionneur électromécanique.

### ARRIERE-PLAN DE L'INVENTION

On connaît, notamment du document US 6 095 293 ou WO 01/20188, un frein pour aéronef comportant des actionneurs électromécaniques démontables unitairement. Ces documents suggèrent de remplacer un actionneur défaillant par un actionneur en état de marche directement sur l'aéronef, sans démonter le frein.

Une telle méthode de maintenance, si séduisante qu'elle puisse paraître, peut cependant poser un certain nombre de problèmes, parmi lesquels la difficulté de re-positionner l'actionneur sur le frein surtout si l'actionneur se trouve dans une région peu accessible du frein.

### OBJET DE L'INVENTION

L'invention a pour objet un frein ne présentant pas les inconvénients de l'art antérieur.

### BREVE DESCRIPTION DE L'INVENTION

A cet effet, on propose un frein de véhicule, comportant un actionneur électromécanique selon la revendication 1.

En effet, le déposant a constaté que la partie de l'actionneur la plus susceptible de faillir est celle qui comporte le moteur électrique. La subdivision de l'actionneur selon l'invention permet de ne remplacer que la deuxième partie en cas de défaillance du moteur seul, évitant ainsi de démonter la première partie qui reste en place sur le frein, ce qui supprime les problèmes de repositionnement de l'actionnement(a tout le moins ici du système vis-écrou) sur le frein en regard des éléments de friction.

Le frein de véhicule selon l'invention comporte des éléments de friction et un support s'étendant en regard des éléments de friction pour porter au moins un actionneur selon l'invention, le frein étant agencé de sorte que la deuxième partie de l'actionneur puisse être séparée de la première partie de l'actionneur alors que celle-ci est toujours portée par le support.

Le support du frein est agencé pour rendre impossible un démontage de la première partie de l'actionneur du support si la deuxième partie de l'actionneur n'a pas été séparée de la première partie de l'actionneur.

Selon un aspect particulier de l'invention, le support est agencé pour recevoir la première partie de l'actionneur selon une première trajectoire de montage, et recevoir la deuxième partie de l'actionneur selon une deuxième trajectoire de montage distincte de la première trajectoire de montage.

De préférence alors, la première trajectoire de montage s'étend dans un plan perpendiculaire à un axe longitudinal du frein, et la deuxième trajectoire de montage tage s'étend selon une direction parallèle audit axe longitudinal du frein.

Un procédé de maintenance du frein de l'invention, comporte les étapes de :
■ identifier une défaillance de l'actionneur ;
■ vérifier si la défaillance provient de la première ou de la deuxième partie ;
et, si la défaillance provient uniquement de la deuxième partie de l'actionneur, remplacer uniquement la deuxième partie de l'actionneur.

### BREVE DESCRIPTION DES DESSINS

L'invention sera mieux comprise à la lumière de la description qui suit en référence aux figures des dessins annexés parmi lesquelles :
- la figure 1 est une vue schématique en coupe selon la ligne I-I de la figure 3 d'une roue équipée d'un frein à actionneurs électromécaniques selon l'invention;
- la figure 2 est une coupe partielle agrandie de l'un des actionneurs équipant le frein de la figure 1 ;
- la figure 3 est une vue de face agrandie du support du frein de la figure 1.
- la figure 4 est une vue analogue à la figure 2 d'une variante de réalisation d'actionneur selon l'invention.

### DESCRIPTION DETAILLEE DE L'INVENTION

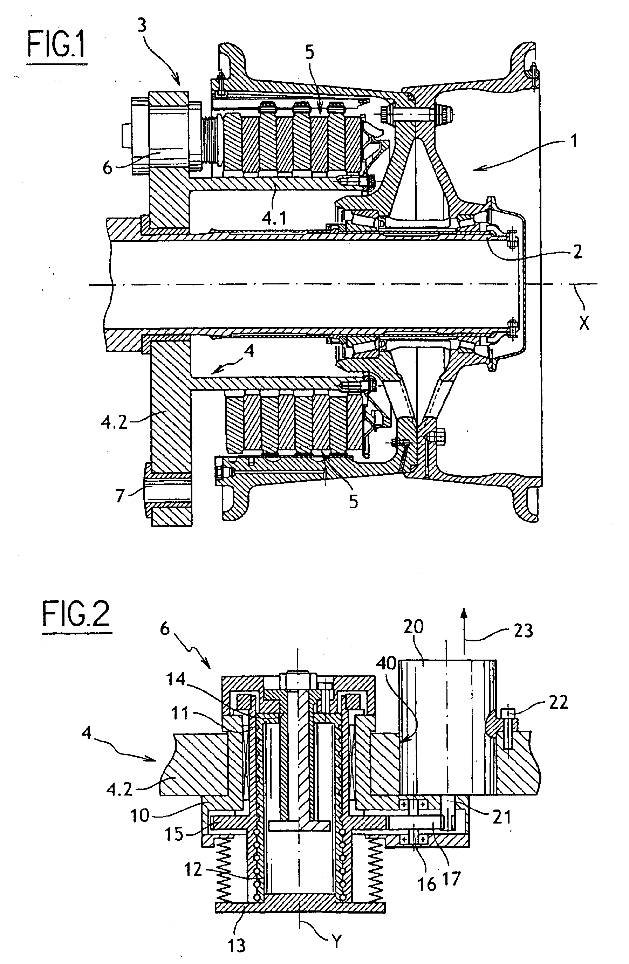

A la figure 1 est illustrée une roue 1 d'aéronef montée pour tourner sur un essieu 2 selon un axe longitudinal X. La roue 1 est associée à un frein 3 s'étendant généralement selon l'axe X, comportant une pile de disques 5 (comprenant des disques stators alternés avec des disques rotors), et un support 4 rapporté sur l'essieu 2 qui porte un certain nombre d'actionneurs électromécani-ques 6.

Le support 4 comporte une partie tubulaire 4.1 coopérant avec certains des disques de la pile de disques 5, ainsi qu'un plateau 4.2 recevant les actionneurs 6.

Le plateau 4.2 comporte un alésage 7 recevant un toc (non représenté) d'arrêt en rotation du support 4 du frein 3.

Comme cela est visible à la figure 2, chaque actionneur 6 comporte une première partie 10 qui reçoit un écrou 11 à rotation selon un axe Y. L'écrou 11 coopère avec une vis 12 terminée par un patin 13. Un organe d'antirotation 14 extérieurement cannelé s'étend selon l'axe Y pour coopérer avec la vis 12 pour l'empêcher de tourner. L'écrou comporte une roue dentée 15 qui, via un certain nombre d'étages de réduction 16, est reliée en rotation à une roue dentée d'entrée 17.

L'actionneur 6 comporte une deuxième partie 20 rapportée sur le plateau 4.2. La deuxième partie 20 abrite un moteur électrique 21 dont on voit ici l'arbre 21 dépasser. Lorsque la deuxième partie 20 est en place sur le support 4, l'arbre du moteur électrique 21 pénètre dans la première partie 10 pour coopèrer avec la roue dentée d'entrée 17 et permettre l'entraînement de l'écrou 11 par le moteur électrique 21, et, partant, le déplacement de la vis 12 en regard de la pile de disques 5.

Les actionneurs 6 permettent ainsi d'imposer sur la pile de disques 5 un effort de pression via le patin 13 qui génère un frottement ralentissant la rotation de la roue 1.

Les deux parties sont ainsi très facilement séparables, et constituent deux unités remplaçables en ligne (LRU en anglais) indépendamment l'une de l'autre.

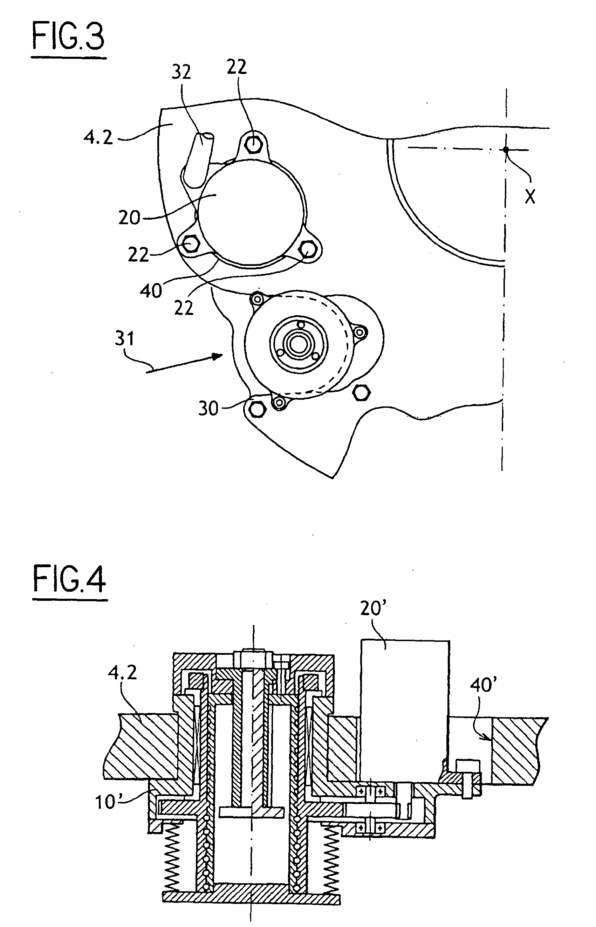

En référence à la figure 3, le plateau 4.2 du support 4 définit des fourches 30 (l'une est visible ici) ayant des ouvertures dirigées selon des directions perpendiculaires à l'axe X indiquées par les flèches 31.

Dans chacune des fourches 30 est accueillie la première partie 10 d'un actionneur 6, de sorte que l'axe Y selon lequel s'étend le système vis-écrou 11,12 de l'actionneur soit parallèle à l'axe longitudinal X (vu ici en bout) du frein. Dans un orifice 40 du plateau 4.2 ménagé à côté de chaque fourche 30 s'étend la deuxième partie 20 associée de l'actionneur 6.

Un câble d'alimentation 32 s'étend depuis la deuxième partie 20 vers une platine d'alimentation non représentée du support 4.

Pour démonter la deuxième partie 20 d'un actionneur 6, il suffit de retirer les trois vis 22 solidarisant la deuxième partie 20 au plateau 4.2, et de dégager la deuxième partie 20 selon une direction parallèle à l'axe X.

La deuxième partie 20 est démontable du plateau 4.2 sans qu'il soit nécessaire pour cela de désolidariser la première partie 10 du plateau 4.2.

Cet aspect de l'invention s'avère particulièrement utile pour intervenir suite à la détection d'une défaillance d'un des actionneurs. En effet, si le moteur est l'organe défaillant de l'actionneur, il suffit alors de remplacer uniquement la deuxième partie 20, sans toucher à la première partie 10 de l'actionneur concerné.

Ceci évite de démonter inutilement la première partie 10 contenant le système vis-écrou, dont le mauvais repositionnement pourrait être particulièrement préjudiciable au fonctionnement du frein.

Une fois la deuxième partie 20 retirée, on peut alors, si nécessaire, démonter la première partie 10 du plateau 4.2, selon la direction 31.

Les deux parties sont ainsi très facilement séparables, et constituent deux unités remplaçables en ligne (LRU en anglais) indépendamment l'une de l'autre.

On notera qu'il n'est pas possible de monter ou démonter la première partie 10 d'un actionneur 6 sur le plateau 4.2 si la deuxième partie 20 n'a pas été préalablement séparée du plateau 4.2.

Ainsi, pour démonter l'actionneur, on commence par séparer la deuxième partie 20 de l'actionneur du plateau 4.2 en l'éloignant selon une direction parallèle à l'axe X, puis on retire la première partie du support en l'éloignant selon une direction 31 perpendiculaire à l'axe X.

Pour monter un actionneur sur le frein, on rapporte la première partie 10 d'un actionneur sur le plateau 4.2 selon une direction 31 perpendiculaire à l'axe X, puis on rapporte la deuxième partie 20 sur le plateau 4.2 selon une direction parallèle à l'axe X.

En variante représentée à la figure 4, on pourra concevoir l'actionneur de l'invention de sorte que la deuxième partie 20' soit rapportée directement sur la première partie 10' et non plus sur le plateau 4.2. De même que précédemment, la première partie 10' ne peut être démontée du support 4.2 si la deuxième partie 20' n'a pas été préalablement démontée.

L'invention n'est pas limitée à ce qui vient d'être décrit, mais bien au contraire englobe toute variante entrant dans le cadre défini par les revendications.

Bien que l'on ait indiqué que la trajectoire de montage de la première partie soit perpendiculaire à l'axe X du frein, tandis que la trajectoire de montage de la deuxième partie est parallèle à l'axe X, les trajectoires de montage pourront être quelconques.

Bien que dans les exemples illustrés, l'écrou de l'actionneur est entraîné en rotation pour le moteur, on pourra bien prévoir que le moteur entraîne la vis en rotation.

## Revendications

1. Frein de véhicule comportant :
- des éléments de friction,
- un support (4) s'étendant en regard des éléments de friction pour recevoir au moins un actionneur électromécanique de freinage (6),
- l'actionneur (6) étant subdivisé en :
. une première partie (10) comportant un système vis-écrou (11, 12), un premier élément du système vis-écrou étant monté rotatif tandis qu'un deuxième élément du système vis-écrou coopère avec un organe d'antirotation (14) de sorte qu'une rotation du premier élément provoque un déplacement linéaire du second élément pour appliquer sélectivement une pression sur les éléments de friction ; le système vis-écrou ayant un axe principal (Y) qui définit un axe de la première partie ;
. une deuxième partie (20) comportant un moteur (21) ayant un axe de rotation définissant un axe de la seconde partie ;
- la première partie (10) étant fixée au support (4), la première partie et la deuxième partie étant séparables et constituant deux unités remplaçables en ligne indépendamment l'une de l'autre ;
- la première partie (10) et la seconde partie (20) coopérant entre elles pour transmettre un mouvement rotatif du moteur (21) au premier élément du système vis-écrou (11, 12) de sorte qu'une rotation du moteur (21) provoque une translation du second élément du système vis-écrou (11, 12), **caractérisé en ce que** l'axe de la première partie (10) et l'axe de la seconde partie (20) sont non-coaxiaux et parallèles en service ;
le support et l'actionneur sont agencés de sorte que la seconde partie (20) soit démontable du frein alors que la première partie (10) est en place sur le support, et la première partie (10) ne pouvant être démontée du frein que si la seconde partie (20) a été auparavant démontée,
et dans lequel la première partie (10) est démontable selon une première trajectoire de montage, et la seconde partie (20) est démontable selon une seconde trajectoire de montage qui est distincte de la première trajectoire,
le support définissant une fourche (30) dans laquelle la première partie (10) est engagée suivant la première trajectoire de montage, le support définissant un orifice (40) dans lequel la seconde partie (20) est engagée selon la deuxième trajectoire de montage, la deuxième partie ayant un arbre de sortie en saillie qui pénètre dans la première partie (10).

2. Frein selon la revendication 1, **caractérisé en ce que** la première trajectoire de montage (31) s'étend dans un plan perpendiculaire à un axe longitudinal (X) du frein, la deuxième trajectoire de montage s'étendant selon une direction (23) parallèle audit axe longitudinal (X) du frein.

3. Frein selon la revendication 1, dans lequel l'actionneur (6) comporte des étages de réduction (16) qui sont inclus dans la première partie (10).

## Patentansprüche

1. Fahrzeugbremse, die folgende Elemente umfasst:
- Reibungselemente,
- einen Träger (4), der sich gegenüber den Reibungselementen erstreckt, um mindestens einen elektromechanischen Brems-Aktuator (6) aufzunehmen,
- wobei der Aktuator (6) unterteilt ist in:
. einen ersten Abschnitt (10), der ein Schrauben-Mutter-System (11, 12) umfasst, wobei ein erstes Element des Schrauben-Mutter-Systems drehbar gelagert ist, während ein zweites Element des Schrauben-Mutter-Systems mit einem Antirotations-Element (14) zusammenwirkt, so dass eine Rotation des ersten Elements eine lineare Verlagerung des zweiten Elements bewirkt, um selektiv einen Druck auf die Reibungselemente anzulegen, wobei das Schrauben-Mutter-System eine Hauptachse (Y) besitzt, die eine Achse des ersten Abschnitts definiert;
. einen zweiten Abschnitt (20), der einen Motor (21) mit einer Rotationsachse umfasst, die eine Achse des zweiten Abschnitts definiert;
- wobei der erste Abschnitt (10) am Träger (4) befestigt ist, wobei der erste Abschnitt und der zweite Abschnitt trennbar sind und unabhängig voneinander zwei LRUs bilden.
- wobei der erste Abschnitt (10) und der zweite Abschnitt (20) untereinander kooperieren, um eine Drehbewegung des Motors (21) an das erste Element des Schrauben-Mutter-Systems (11, 12) zu übertragen, so dass eine Rotation des Motors (21) eine Translation des zweiten Elements des Schrauben-Mutter-Systems (11, 12) bewirkt, **dadurch gekennzeichnet, dass** die Achse des ersten Abschnitts (10) und die Achse des zweiten Abschnitts (20) bei Betrieb nicht-koaxial und parallel sind,
und dass der Träger und der Aktuator sind so ausgebildet sind, dass der zweite Abschnitt (20) von der Bremse lösbar ist, während der erste Abschnitt (10) auf dem Träger positioniert ist, und der erste Abschnitt (10) nur von der Bremse gelöst werden kann, wenn zuvor der zweite Abschnitt (20) gelöst wurde, wobei der erste Abschnitt (10) entlang einer ersten Montagebahn lösbar ist und der zweite Abschnitt (20) entlang einer zweiten Montagebahn, die sich von der ersten Montagebahn unterscheidet, lösbar ist,
wobei der Träger eine Gabel (30) definiert, in die der erste Abschnitt (10) entlang der ersten Montagebahn eingreift, wobei der Träger eine Öffnung (40) definiert, in die der zweite Abschnitt (20) entlang der zweiten Montagebahn eingreift, und wobei der zweite Abschnitt eine überstehende Ausgangswelle aufweist, die in den ersten Abschnitt (10) eindringt.

2. Bremse nach Anspruch 1, **dadurch gekennzeichnet, dass** sich die erste Montagebahn (3 1) in einer zu einer Längsachse (X) der Bremse senkrechten Ebene erstreckt, wobei sich die zweite Montagebahn in einer zur besagten Längsachse (X) der Bremse parallelen Richtung (23) erstreckt.

3. Bremse nach Anspruch 1, bei der der Aktuator (6) Reduktionsstufen (16) umfasst, die im ersten Abschnitt (10) enthalten sind.

## Claims

1. A vehicle brake comprising friction elements and a support (4) extending facing the friction elements in order to carry at least one electromechanical braking actuator (6), the actuator (6) being subdivided into:
- a first portion (10) comprising a screw-and-nut system (11, 12), a first element of the screw-and-nut system being rotatable; while a second portion of the screw-and-nut system co-operate with an antirotation member so that the second element moves linearly in response to a rotation of the second element so as to selectively exert compression on friction elements of the brake; the screw and nut system having a main axis (Y) that defines an axis of the first portion; and
- a second portion (20) comprising a motor having an axis that defines an axis of the second portion (20);
- the first portion (10) being secured to the support (4), the first and second elements being designed to be separable and constituting two line replaceable units that can be replaced independently of each other ;
- the first portion (10) and the second portion (20) cooperating with each other to transmit rotary motion of the motor (21) to the first element of the screw-and-nut system (11, 12) so that a rotation of the motor (21) induces a translation of the second element of the screw-and-nit system (11, 12) **characterized in that** the axis of the first portion (10) and the axis of the second portion are non coaxial and parallel when in use;
the support and the actuator are arranged in such a manner that the second portion (20) can be separated from the first portion of the actuator while said first portion remains in place on the support, and the first portion (10) can not be separated from the brake unless the second portion (20) has previously been removed from the brake,
and wherein the first portion (10) is removable along a first assembly path, and the second portion (20) is removable along a second assembly path that is distinct from the first assembly path;
the support defining a fork (30) in which the first portion (10) is engaged along a first assembly path, the support defining an aperture (40) in which the second portion (20) is engaged along a second assembly path, the second portion having an extending output shaft that penetrates into the first portion (10).

2. A brake according to claim 1, **characterized in that** the first assembly path (31) extends in a plane perpendicular to a longitudinal axis (X) of the brake, and the second assembly path extends in a direction (23) parallel to said longitudinal axis of the brake.

3. A brake according to claim 1, wherein the actuator (6) comprises gearing stages (16) which are included in first portion (10)
